# EUROPEAN PATENT APPLICATION

(11) **EP 1 761 042 A2**
(43) Date of publication of application: **07.03.2007**
(21) Application number: 06018148.4
(22) Date of filing: 30.08.2006
(51) Int. Cl.: H04N 5/232

(54) **Remote camera platform system**

(30) Priority: 02.09.2005 JP 2005254346
(71) Applicant: Fujinon Corporation, Saitama-shi, Saitama (JP)
(72) Inventor: Shimamura, Takashi, Saitama-shi, Saitama (JP)
(74) Representative: Klunker . Schmitt-Nilson . Hirsch

(57) **Abstract**

A remote camera platform system 10 includes an image-capturing device 140 having an image-capturing unit; at least one remote camera platform 100 having a driving unit 130 that rotates the image-capturing device 140 in at least one of a pan direction and a tilt direction; an operation device 200 that operates the remote camera platform 100; and at least one mobile terminal 300 having a wireless communication unit 350 that communicates with the operation device 200. The wireless communication unit 350 receives a captured image, which is transmitted from the operation device 200. Thus, a person who carries the mobile terminal can confirm the captured image of the image-capturing device 140 while moving. The remote camera platform 100 may include a wireless communication unit 150 to directly transmit the captured image to the mobile terminal 300. Furthermore, the mobile terminal 300 may directly operate the remote camera platform 100.

## Description

### BACKGROUND OF THE INVENTION

### 1. Field of the Invention

The invention relates to a remote camera platform system, and more particularly to a remote camera platform system for remotely operating a remote camera platform to monitor a predetermined region.

### 2. Description of the Related Art

A remote camera platform, for example, includes an image-capturing device. The remote camera platform performs pan/tilt rotation of the image-capturing device and focus and zoom adjustment of the image-capturing device by a remote operation. For example, when the remote camera platform is used in monitoring, an operator of the remote camera platform operates the remote camera platform using an operation device, which is wired-connected to the remote camera platform, at a place separated from a monitored region in which the remote camera platform is provided. For example, the operator views a captured image displayed on a monitor to check whether or not a suspicious individual exists in the monitored region.

As a system for operating a monitoring camera at a remote place using the operation device, for example, JP 2003-37755 A discloses a underwater monitoring system for operating a camera platform, which causes an underwater monitoring camera to perform a pan/tilt operation by wireless communication from an operation unit provided at a remote place. Such a system is used to confirm the situation of a monitored region at a remote place.

However, when it is necessary to catch a suspicious individual who exists in the monitored region, although the operator recognizes the suspicious individual in the monitored region, it is difficult for the operator who is at a place separated from the monitored region to catch the suspicious individual. Since a guard who actually monitors at the monitored region so as to catch the suspicious individual cannot check the captured image of the image-capturing device, the guard searches for the suspicious individual while receiving an instruction from the operator, for example, using a wireless device. Accordingly, it takes much time for the guard to actually confirm the suspicious individual.

The guard who is at the monitored region cannot directly operate the remote camera platform. The guard who tracks the suspicious individual cannot move with the operation device wired-connected to the remote camera platform because such a configuration restricts his/her movement. Accordingly, this monitoring method cannot be practically used.

### SUMMARY OF THE INVENTION

Accordingly, in view of the above circumstances, the invention has been made and provides a new or improved remote camera platform system capable of checking a captured image of an image-capturing device while an operator is moving.

According to an aspect of the invention, a remote camera platform system includes an image-capturing device, at least one remote camera platform, an operation device and at least one mobile terminal. The image-capturing device includes an image-capturing unit. The at least one remote camera platform includes a driving unit that rotates the image-capturing device in at least one of a pan direction and a tilt direction. The operation device operates the at least one remote camera platform. The at least one mobile terminal includes a wireless communication unit that communicates with the operation device. The wireless communication unit of the mobile terminal receives an image, which is captured by the image-capturing device and is transmitted from the operation device.

According to this configuration, an operator who operates the operation device remotely operates the remote camera platform provided in an image-capturing region. The operator operates the remote camera platform to move the image-capturing device so as to capture a desired position in the image-capturing region. The image captured by the image-capturing device is transmitted to the operation device and displayed on a display device connected to the operation device so that the operator can confirm the captured image. In the remote camera platform system having the above configuration, the image captured by the image-capturing device is wirelessly transmitted to the mobile terminal, for example, through a wireless communication unit of the operation device. Therefore, the mobile terminal, which receives the captured image, can display the captured image, for example, on a display unit of the mobile terminal. Accordingly, a person who carries the mobile terminal can confirm the image captured by the image-capturing device.

According to another aspect of the invention, a remote camera platform system includes an image-capturing device, at least one remote camera platform and at least one mobile terminal. The image-capturing device includes an image-capturing unit. The at least one remote camera platform includes a driving unit that rotates the image-capturing device in at least one of a pan direction and a tilt direction. The at least one mobile terminal includes a wireless communication unit that communicates with the remote camera platform. The wireless communication unit of the mobile terminal transmits a control signal for controlling the remote camera platform to the remote camera platform or the wireless communication unit receives an image captured by the image-capturing device.

According to this configuration, the mobile terminal and the remote camera platform having the image-capturing device include respective wireless communication units so as to be able to communicate with each other. Accordingly, since the control signal for controlling the remote camera platform is transmitted from the mobile terminal, the mobile terminal can operate the remote camera platform. The remote camera platform can wirelessly transmit the image captured by the image-capturing device provided in the remote camera platform to the mobile terminal through the wireless communication unit. Accordingly, since the operator who carries the mobile terminal can confirm the image captured by the image-capturing device while moving and also operate the remote camera platform in order to capture a desired position by the image-capturing device.

Furthermore, such a remote camera platform system may further include an operation device that remotely operates the remote camera platform. The operation device is connected to the remote camera platform. For example, the operation device can operate the remote camera platform and receive the image captured by the image-capturing device provided in the remote camera platform. Accordingly, when the image captured by the image-capturing device is transmitted from the operation device to the wireless communication unit of the mobile terminal, the person who carries the mobile terminal can confirm the image captured by the image-capturing device.

In the case where both of the operation device and the mobile terminal can operate the remote camera platform, any one of the operation device and the mobile terminal may operate the remote camera platform based on a predetermined rule so that the operation device and the mobile terminal cannot simultaneously operate the remote camera platform.

Such a remote camera platform system is, for example, applicable to a monitoring system for monitoring a predetermined region.

As described above, according to the invention, it is possible to provide a remote camera platform system, which allows a person to confirm the image captured by the image-capturing device with the person moving.

### BRIEF DESCRIPTION OF THE DRAWINGS

Fig. 1 is a schematic diagram showing a remote camera platform system according to a first embodiment of the invention.
Fig. 2 is a block diagram schematically showing the entire configuration of the remote camera platform system according to the first embodiment.
Fig. 3 is a flowchart showing process performed by a monitoring system, which uses the remote camera platform system according to the first embodiment.
Fig. 4 is a flowchart showing an operation-entity switching process in the remote camera platform according to the first embodiment.

### DETAILED DESCRIPTION OF EXEMPLARY EMBODIMENTS

Hereinafter, an embodiment of the invention will be described in detail with reference to the accompanying drawings. In the specification and drawings, components having the substantially same functions are denoted by the same reference numerals and duplicate description will be omitted.

### (First Embodiment)

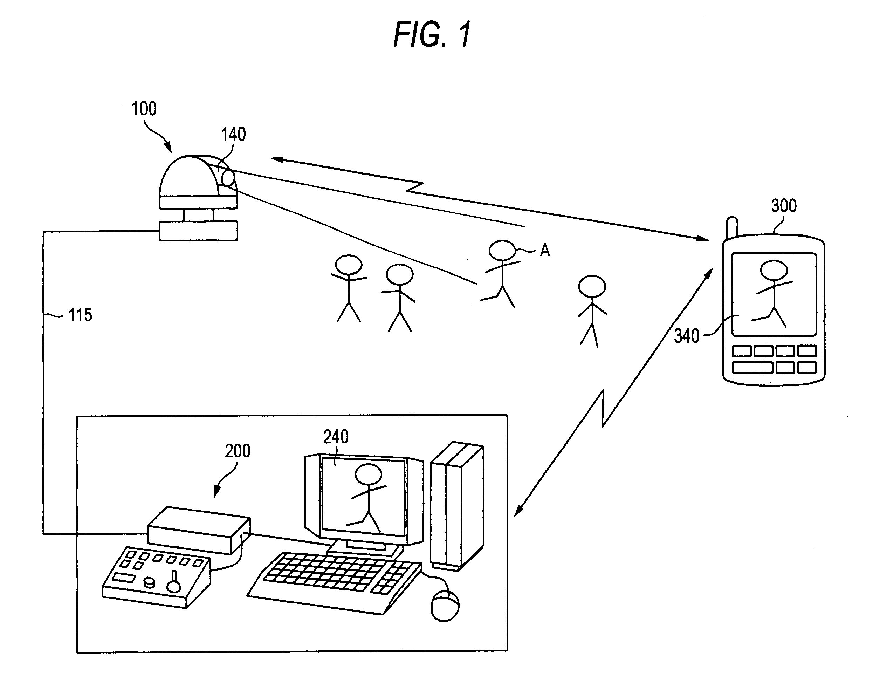

First, a remote camera platform system according to a first embodiment of the invention will be described with reference to Fig. 1. Fig. 1 is a schematic diagram showing the remote camera platform system according to this embodiment.

The remote camera platform system according to this embodiment is, for example, used to monitor a specific region such as each floor in a building or a depository. As shown in Fig. 1, for example, an image-capturing device 140 of a remote camera platform 100 provided in a monitored region captures the monitored region. The remote camera platform 100 is remotely operated by an operator who is at a place (for example, on a floor different from the monitored floor in the building) separated from the monitored region. An image captured by the image-capturing device 140 is transmitted to an operation device 200 and displayed on a display unit 240 such as a monitor. The operator views the image displayed on the monitor 240 to confirm whether or not a suspicious individual exists in the monitored region.

Meanwhile, a person (for example, a guard) who carries a mobile terminal 300 is in the monitored region and can directly monitor the suspicious individual in the monitored region.

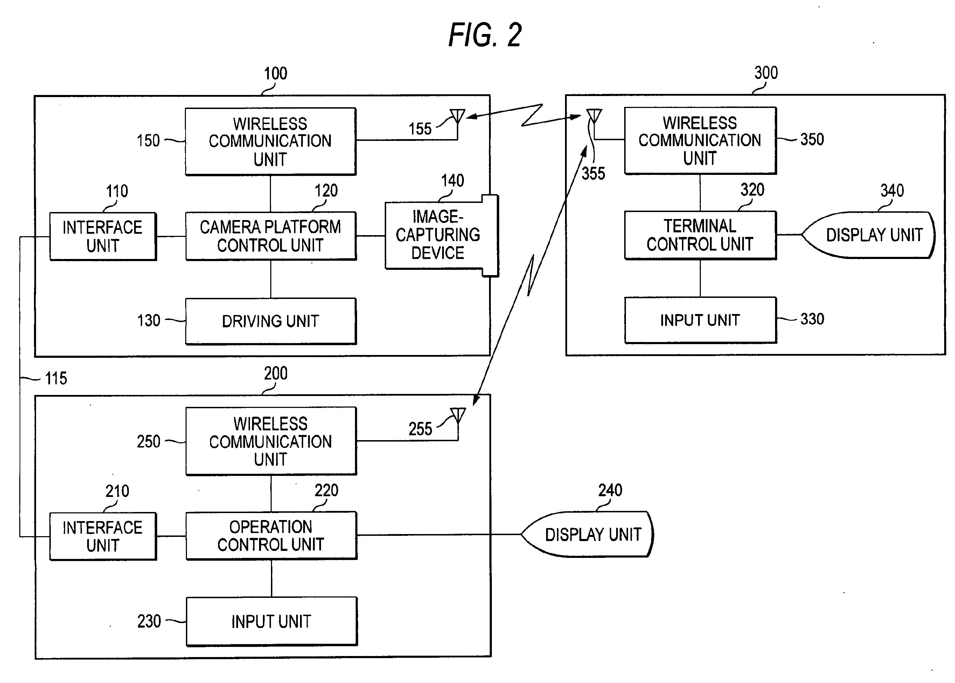

Next, devices included in the remote camera platform system according to this embodiment will be described with reference to Fig. 2. Fig. 2 is a block diagram schematically showing the entire configuration of the remote camera platform system according to this embodiment.

The remote camera platform system 10 according to this embodiment, as shown in Fig. 2, includes the image-capturing device 140 for captures an image-capturing region, the remote camera platform 100 provided with the image-capturing device 140, the operation device 200 for operating the remote camera platform 100, and the mobile terminal 300.

The remote camera platform 100 rotates the image-capturing device 140 provided in the remote camera platform 100 in a pan direction or a tilt direction. For example, the remote camera platform 100 includes an interface unit 110, a camera platform control unit 120, a driving unit 130 and a wireless communication unit 150.

The interface unit 110 is a connection unit for connecting the operation device 200 described later and is wired-connected to the operation device 200, for example, by a cable 115. The camera platform control unit 120 calculates an operation amount of the remote camera platform 100 and an operation amount of the image-capturing device 140 from an operation signal transmitted from the operation device 200. The driving unit 130 rotates the remote camera platform 100 in the pan direction or the tilt direction and, for example, includes a motor. The driving unit 130 can move the image-capturing device 140 included in the remote camera platform 100 to an image-capturing position. The wireless communication unit 150 transmits/receives data to/from another device having a wireless communication unit. For example, the wireless communication unit 150 has an antenna 155 for transmitting/receiving a radio wave.

The operation device 200 remotely operates the remote camera platform 100, at a place separated from the monitored region. For example, the operation device 200 includes an interface unit 210, an operation control unit 220, an input unit 230 and a wireless communication 250.

The interface unit 210 is a connection unit for connecting with the remote camera platform 100 and is wired-connected to the interface unit 110 of the remote camera platform 100, for example, by the cable 115. The operation control unit 220 calculates the operation amount of the remote camera platform 100 based on an input value from the wireless communication unit 250 and the input unit 230, which are described later. The input unit 230 is a device, which is actually operated by the operator to operate the remote camera platform 100. The input unit 230, for example, includes a joystick for inputting the rotation direction or the rotation speed of the remote camera platform 100; a focus grip for focusing the image-capturing device 140; and a zoom adjustment lever for adjusting the zoom of the image-capturing device 140 (all of which are not shown). The input unit 230 may further include a transmission button for transmitting an image to a mobile terminal 300 and a button for switching a platform operation entity. The wireless communication unit 250 transmits/receives data to/from another device having a wireless communication device. For example, the wireless communication unit 250 has an antenna 255 for transmitting/receiving a radio wave.

The operation device 200 is connected to a display unit 240 for displaying image data transmitted from the image-capturing device 140. The display unit 240 is, for example, a monitor. The operator views the image displayed on the monitor to monitor the monitored region.

The mobile terminal 300 can operate the remote camera platform 100 and display the image captured by the image-capturing device 140. For example, the mobile terminal 300 is implemented by a personal digital assistant (PDA) or a notebook type personal computer (PC). The mobile terminal 300, for example, includes a terminal control unit 320, an input unit 330, a display unit 340 and a wireless communication unit 350.

The terminal control unit 320 processes data transmitted/received between the remote camera platform 100 and the operation device 200. The input unit 330 inputs the operation amount of the remote camera platform 100 and information to be transmitted to the operation device 200. For example, the input unit 330 has operation buttons for adjusting the rotation direction of the remote camera platform 100, the rotation speed of the remote camera platform 100, the zoom of the image-capturing device 140 and focusing of the image-capturing device 140. The input unit 330 may have a transmission button for transmitting to the operation device 200 a request for operating the remote camera platform 100 and a notification that operating the remote camera platform 100 is finished. The display unit 340 displays the image captured by the image-capturing device 140. The wireless communication unit 350 transmits/receives data to/from another device having a wireless communication device. For example, the wireless communication unit 350 has an antenna 355 for transmitting/receiving a radio wave.

Since the remote camera platform 100, the operation device 200 and the mobile terminal 300, which constitute the remote camera platform system 10 according to this embodiment, have the wireless communication units 150, 250 and 350, respectively, it is possible to perform wireless data communication among the devices by establishing a network such as a wireless local area network (LAN). For example, the following wireless data communication may be performed among the devices of the remote camera platform system according to this embodiment.

### (1. Wireless Communication between Operation Device and Mobile Terminal)

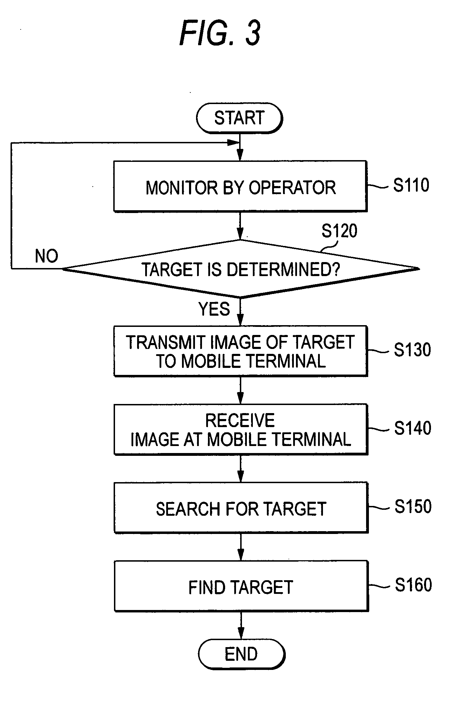

First, in the remote camera platform system 10 according to this embodiment, the image captured by the image-capturing device 140 is transmitted from the operation device 200 to the mobile terminal 300 through the wireless communication units 250 and 350. Here, process flow of a monitoring system in which image data are communicated between the operation device 200 and the mobile terminal 300 will be described with reference to Fig. 3. Fig. 3 is a flowchart showing the process of the monitoring system, which uses the remote camera platform system 10 according to this embodiment.

In the monitoring system, which uses the remote camera platform system 10 according to this embodiment, as described above, the image-capturing device 140 provided in the monitored region captures the monitors region. The operator of the remote pad head 100 views the monitor 240 for displaying the image to confirm whether or not a suspicious individual exists in the monitored region (step S110: monitoring step). The operation device 200 for operating the remote pad head 100 is connected to the remote pad head 100 by the cable 115 and provided in a place separated from the monitored region. The image captured by the image-capturing device 140 is transmitted to the operation device 200 and can be continuously displayed on the monitor 240, for example, in a Motion JPEG format.

Subsequently, when the operator confirms that the suspicious individual A exists in the image displayed on the monitor 240, the operator operates the operation device 200 to move the image-capturing device 140 to capture a detailed image of the suspicious individual A or to track the suspicious individual A (step S120: target determining step). If the operation does not recognize the suspicious individual, the monitoring by the operator in the step S110 may be continuously performed.

The operator who has confirmed the suspicious individual A in the image inputs a transmission instruction for transmitting the image captured by the image-capturing device 140 to the mobile terminal 300, through the input unit 230 of the operation device 200 (step S130: image transmitting step). In the step S130, if the transmission instruction of the image data is input, the image data is transmitted from the operation device 200 to the mobile terminal 300 through the wireless LAN, for example, in the Motion JPEG format. Accordingly, the same image as that displayed on the monitor 240 is displayed on the display unit 340 of the mobile terminal 300. Thus, the person who carries the mobile terminal can obtain information on the suspicious individual A as an image.

The mobile terminal 300 receives the captured image data transmitted in the step S130 and displays the received image thereon (step S140: image receiving step). The person who carries the mobile terminal (for example, a guard in the monitored region) carries the mobile terminal 300. For example, when the person who carries the mobile terminal need approach the suspicious individual without the suspicious individual being not aware, the image captured by the image-capturing device 140 is transmitted to the mobile terminal 300 so that the person who carries the mobile terminal can confirm the position or the appearance of the suspicious individual in the monitored region, without listening information about the suspicious individual from the operator.

Thereafter, the person who carries the mobile terminal searches for the suspicious individual A while confirming the captured image displayed on the display unit 340 of the mobile terminal 300 (step S150: searching step). If the image captured by the image-capturing device 140 is transmitted to the mobile terminal 300 as needed, the person who carries the mobile terminal 300 can confirm the movement of the suspicious individual. Since the remote camera platform 100 is operated by the operator, the person who carries the mobile terminal can obtain a desired image (for example, an image which tracks the suspicious individual) without operating the remote camera platform 100.

When the image captured by the image-capturing device 140 is transmitted to the mobile terminal 300, the person who carries the mobile terminal can actually confirm the suspicious individual in the monitored region while confirming the image, which is captured by the image-capturing device 140 and is received at the mobile terminal 300 (step S160).

According to this configuration, when the captured image of the monitored region is transmitted to the mobile terminal, the person who carries the mobile terminal can search for the suspicious individual while viewing the captured image of the image-capturing device 140. At this time, the transmission/reception of the image data between the operation device 200, which is on a transmission side, and the mobile terminal 300, which is on a reception side, are performed via the wireless communication. Accordingly, the person who carries the mobile terminal can move without his/her movement being restricted by a wiring such as a cable. Since the information on the suspicious individual can be obtained without having a conversation with the operator of the operation device 200, the suspicious individual is hardly aware of movement of the person who carries the mobile terminal.

### (2. Wireless Communication between Remote Camera Platform and Mobile Terminal)

Next, wireless communication between the remote camera platform 100 and the mobile terminal 300 will be described. The remote camera platform 100 according to this embodiment includes the wireless communication unit 150 as described above. As shown in Figs. 1 and 2, the remote camera platform 100 and the mobile terminal 300 directly communicate with each other via the wireless LAN without using the operation device 200.

In the wireless communication, at first, image data can be transmitted from the remote camera platform 100 to the mobile terminal 300. Even in this case, the image captured by the image-capturing device 140 is transmitted, for example, in the Motion JPEG format and continuously displayed on the display unit 340 of the mobile terminal 300, similar to the communication between the operation device 200 and the mobile terminal 300.

The mobile terminal 300 can operate the remote camera platform 100 directly. For example, when an operation button for operating the remote camera platform 100 is provided in the input unit 330 of the mobile terminal 300, it becomes possible for the mobile terminal 300 to operate the remote camera platform 100. Therefore, the person who carries the mobile terminal 300 can input the operation amount of the remote camera platform 100 through the input unit 330 of the mobile terminal 300 to thereby move the image-capturing device 140 to the image-capturing position. Accordingly, for example, movement and feature of the suspicious individual, which cannot be directly confirmed by the person who carries the mobile terminal, can be confirmed from the image captured by the image-capturing device 140.

Between the remote camera platform 100 and the mobile terminal 300, the image captured by the image-capturing device 140 may be transmitted from the remote camera platform 100 to the mobile terminal 300 and a control instruction for operating the remote camera platform 100 may be transmitted from the mobile terminal 300 via the wireless data communication.

Both the operation device 200 and the mobile terminal 300 may include a function for operating the remote camera platform 100. Accordingly, when the operation device 200 and the mobile terminal 300 simultaneously operate the remote camera platform 100, the remote camera platform 100 cannot be properly operated.

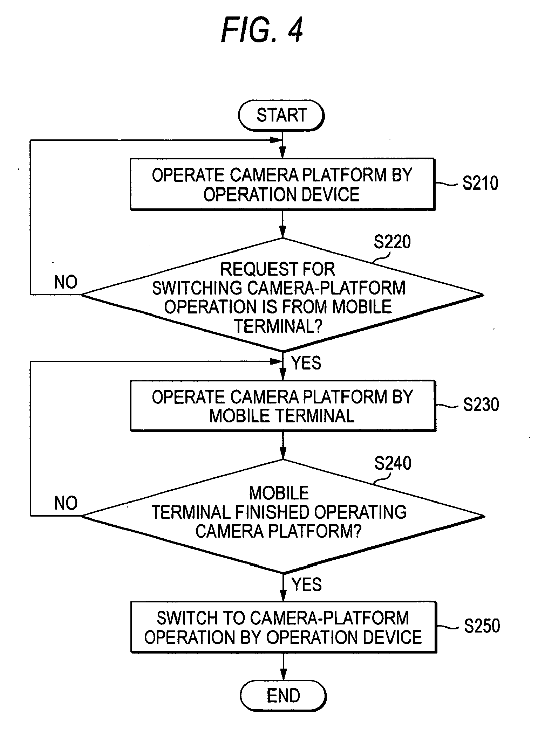

Accordingly, it is preferable that a predetermined rule is set up with respect to the operation of the remote camera platform 100, and that the operation device 200 and the mobile terminal 300 are not allowed to operate the remote camera platform 100 simultaneously. An example of the rule of the operation of the remote camera platform 100 will be described with reference to Fig. 4. Fig. 4 is a flowchart showing an operation-entity switching process of the remote camera platform 100 according to this embodiment. In this example, the operation device 200 usually operates the remote camera platform 100.

First, the operation device 200 operates the remote camera platform 100 (step S210: control by the operation device). At this time, the mobile terminal 300 cannot operate the remote camera platform 100.

Subsequently, the operation device 200 checks whether or not a request for operating the remote camera platform 100 is transmitted from the mobile terminal 300 (step S220: confirmation of a request for switching camera -platform operation). As described above, in this example, the operation device 200 usually operates the remote camera platform 100. Therefore, when the person who carries the mobile terminal 300 is to operate the remote camera platform 100 using the mobile terminal 300, the request for operating the remote camera platform is transmitted from the mobile terminal 300 to the operation device 200 so as to switch entity, which operates the remote camera platform 100. When the request for operating the remote camera platform is not transmitted from the mobile terminal 300, the operation device 200 keeps operating the remote camera platform.

If the request for operating the remote camera platform is transmitted from the mobile terminal 300, the operation of the remote camera platform 100 using the mobile terminal 300 starts (step S230: control using the mobile terminal). In the step S230, if the request for operating the remote camera platform 100 is transmitted from the mobile terminal 300, entity, which operates the remote camera platform 100, can be switched from the operation device 200 to the mobile terminal 300. When the operator of the remote camera platform 100 is switched to the mobile terminal 300, the person who carries the mobile terminal operates the remote camera platform 100 using the mobile terminal 300 so that the image-capturing device 140 captures a desired position.

The image captured by the image-capturing device 140 is transmitted from the wireless communication unit 150 of the remote camera platform 100 to the mobile terminal 300, for example, via the wireless LAN. Therefore, the person who carries the mobile terminal can confirm the captured image. At this time, the operation device 200 cannot operate the remote camera platform 100. Although the image captured by the image-capturing device 140 is directly transmitted from the remote camera platform 100 to the mobile terminal 300 herein, the invention is not limited thereto. The captured image may be transmitted from the remote camera platform 100 to the mobile terminal 300 via the operation device 200.

Thereafter, it is checked whether or not the operation of the remote camera platform 100 by the mobile terminal 300 is finished (step S240: confirming that the mobile terminal finishes the control). The confirming that the mobile terminal 300 finishes operating the remote camera platform 100 may be performed by receiving operation finishing notification transmitted from the mobile terminal 300. Alternatively, when a predetermined time has elapsed, the entity, which operates the remote camera platform 100, may be switched to the operation device 200. If the mobile terminal 300 has not finished operating the remote camera platform 200, the mobile terminal 300 keeps operating the remote camera platform 100.

When the operation device 200 receives the operation finishing notification from the mobile terminal 300, the operation device starts operating the remote camera platform 100 (step S250: switching to the control by the operation device). When the entity, which operates the remote camera platform 100, is switched to the operation device 200, the mobile terminal 300 cannot operate the remote camera platform 100.

In this manner, by switching the entity, which operates the remote camera platform 100, it is possible to prevent plural devices from simultaneously operating the remote camera platform 100. The rule for switching the entity, which operates the remote camera platform 100, is not limited thereto. For example, different weights may be given to the devices 200 and 300 with respect to the operation of the remote camera platform 100 to give priority to the devices 200 and 300.

As described above, the wireless communication units 150 and 350 are provided in the remote camera platform 100 and the mobile terminal 300, respectively, and the wireless communication is performed therebetween, for example, via the wireless LAN. Therefore, the image data can be directly transmitted from the remote camera platform 100 to the mobile terminal 300, and the person who carries the mobile terminal can directly operate the remote camera platform 100. Accordingly, the person who carries the mobile terminal can easily obtain the image requested by himself.

So far, the remote camera platform system according to the first embodiment are described. In the monitoring system including the remote camera platform 100, the operation device 200 and the mobile terminal 300, the wireless communication network such as the wireless LAN is established by the wire communication units 150, 250 and 350. Accordingly, the person who carries the mobile terminal can receive the image captured by the image-capturing device 140 from the operation device 200 or the remote camera platform 100 using the mobile terminal 300. Thus, the person who carries the mobile terminal can confirm the image while moving. Since the suspicious individual can be confirmed from the image, it is easy to search for the suspicious individual. Also, a person can confirm the image while moving, the person can obtain information from the image-capturing device 140 while tracking the suspicious individual. Furthermore, the remote camera platform 100 can be operated directly through the mobile terminal 300. Therefore, an image requested by the person who carries the mobile terminal can be easily obtained by himself.

Although the preferred embodiment of the invention will be described with reference to the accompanying drawings, it should be noted that the invention is not limited to the above-described embodiment. It should be understood that one skilled in the art can achieve various modified examples within the scope of claims, and that those modified examples are also within the scope of the invention.

For example, although one remote camera platform 100 and one mobile terminal 300 are provided in the remote camera platform system 10 in the above-described embodiment, the invention is not limited thereto. At least two remote camera platforms 100 and at least two mobile terminals 300 may be provided. In this case, the image captured by the image-capturing device 140 may be transmitted from the operation device 200 to all the mobile terminals 300 in the system or a selecting unit may be provided in the operation device 200 so as to select a mobile device 300 to which the captured image will be transmitted. Similarly, when plural remote camera platforms are provided in the monitored region, an operation selecting unit may be provided in the operation device 200 or the mobile terminal 300 so as to select a specific remote camera platform to be operated.

Although the remote camera platform 100 and the operation device 200 are connected by the cable in the above-described embodiment, the invention is not limited thereto. The remote camera platform 100 and the operation device 200 may be wirelessly connected, for example, using the wireless LAN.

In the above-described embodiment, the mobile terminal 300 is a terminal for displaying the image captured by the image-capturing device 140. However, the invention is not limited thereto. For example, a communication unit for communicating with the operator of the operation device 200 may be provided. This configuration increases the number of devices for exchanging information between the operator of the operation device 200 and the person who carries the mobile terminal increases. Therefore, the operator of the operation device 200 and the person who carries the mobile terminal increases can directly exchange information of the suspicious individual and operation of the remote camera platform 100.

The invention is applicable to a remote camera platform system, and more particularly to a remote camera platform system for remotely operating a remote camera platform to monitor a predetermined region.

## Claims

1. A remote camera platform system comprising:
an image-capturing device comprising an image-capturing unit;
at least one remote camera platform comprising a driving unit that rotates the image-capturing device in at least one of a pan direction and a tilt direction;
an operation device that operates the at least one remote camera platform; and
at least one mobile terminal comprising a wireless communication unit that communicates with the operation device, wherein:
the wireless communication unit of the mobile terminal receives an image, which is captured by the image-capturing device and is transmitted from the operation device.

2. A remote camera platform system comprising:
an image-capturing device comprising an image-capturing unit;
at least one remote camera platform comprising a driving unit that rotates the image-capturing device in at least one of a pan direction and a tilt direction; and
at least one mobile terminal comprising a wireless communication unit that communicates with the remote camera platform, wherein:
the wireless communication unit of the mobile terminal transmits a control signal for controlling the remote camera platform to the remote camera platform or the wireless communication unit receives an image captured by the image-capturing device.

3. The remote camera platform system according to claim 2, further comprising:
an operation device that remotely operates the remote camera platform, wherein:
the wireless communication unit of the mobile terminal receives the image, which is captured by the image-capturing device and is transmitted from the operation device.

4. The remote camera platform system according to any one of claims 2 to 3, wherein any one of the operation device and the mobile terminal can operate the remote camera platform based on a predetermined rule.
